Europäisches Patentamt

European Patent Office

Office européen des brevets

(19)

(11) Veröffentlichungsnummer : **0 126 291**
**B1**

(12) # EUROPÄISCHE PATENTSCHRIFT

(45) Veröffentlichungstag der Patentschrift :
27.07.88

(51) Int. Cl.⁴ : **F 16 K 31/383**

(21) Anmeldenummer : **84104262.5**

(22) Anmeldetag : **14.04.84**

(54) **Druckmediumbetätigtes Ventil.**

(30) Priorität : **19.05.83 CH 2731/83**
**30.01.84 CH 410/84**

(43) Veröffentlichungstag der Anmeldung :
**28.11.84 Patentblatt 84/48**

(45) Bekanntmachung des Hinweises auf die Patenterteilung : **27.07.88 Patentblatt 88/30**

(84) Benannte Vertragsstaaten :
**BE DE FR GB SE**

(56) Entgegenhaltungen :
**EP-A- 0 054 602**
**CH-A-    528 693**
**DE-B- 2 514 688**
**DE-C-    818 195**
**US-A- 3 907 248**
**US-A- 4 240 463**

(73) Patentinhaber : **GEBRÜDER SULZER AKTIENGESELL-
SCHAFT**
**Zürcherstrasse 9**
**CH-8401 Winterthur (CH)**

(72) Erfinder : **Grotloh, Karlheinz**
**Im Morgentau 33d**
**CH-8408 Winterthur (CH)**

(74) Vertreter : **Dipl.-Ing. H. Marsch Dipl.-Ing. K. Sparing
Dipl.-Phys.Dr. W.H. Röhl Patentanwälte
Rethelstrasse 123
D-4000 Düsseldorf (DE)**

## Beschreibung

Die Erfindung betrifft ein druckmediumbetätigtes Ventil gemäss dem Oberbegriff des Anspruchs 1.

Aus der CH-A-528 693 ist ein solches Ventil bekannt, dessen Verschlussteil durch Oeffnen und Schliessen der in den Verbindungs- und Entlastungsleitungen angeordneten Steuerventile rasch bewegbar ist, wobei die Schliess- und die Oeffnungszeit des Verschlussteils im Normalbetrieb konstant sind und von den Auslegungsgrössen des Ventils, insbesondere von den Druckverhältnissen und von den Ventilabmessungen, abhängen. Das bedeutet, dass eine Aenderung der Schliess- und der Oeffnungszeit nicht ohne weiteres möglich ist, was noch dadurch unterstützt wird, dass die Steuerventile meistens als einfache, ferngesteuerte Magnetventile ausgebildet sind, die zwar zuverlässig, robust und kostengünstig sind, jedoch nur die beiden Stellungen « offen » und « geschlossen » einnehmen können ; eine einfache Aenderung des Oeffnungsquerschnitts erlauben sie nicht. In bezug auf den Normalbetrieb des Ventils ist dieser Sachverhalt aber befriedigend und gewährleistet im voraus berechenbare Betriebsverhältnisse. Im Falle einer Störung, z. B. Bruch einer zu den Steuerventilen führenden Steuerleitung, werden beide Kolbenräume mit Druckmedium aus dem Druckbereich des Eintrittsstutzens gefüllt, und der Kolben mit dem Verschlussteil bewegt sich — ausgehend von der Offenstellung des Verschlussteils — mit etwas kleinerer Geschwindigkeit als im Normalbetrieb in die Schliessstellung. Diese Geschwindigkeit ist immer noch relativ hoch, da sie vom Durchflusswiderstand der ersten und der zweiten Verbindungsleitung abhängig ist, die für den Normalbetrieb dimensioniert sind.

Bei Verwendung des Ventils als Sicherheitsventil wird wegen besonderer Anforderungen an die Betriebssicherheit mit einer gewissen Häufigkeit eine Funktionstüchtigkeitsprüfung verlangt. Ein häufiges Betätigen dieses Ventils zu solchen Prüfzwecken unter den bei Normalbetrieb herrschenden Bedingungen würde wegen des abrupten Schliessvorganges die Sitzfläche im Ventil sehr stark beanspruchen, was eine erhöhte Gefahr von Undichtheiten und damit eine erhebliche Verkürzung der Lebensdauer des Ventils durch rasche Abnützung der Sitzflächen bedeutet. Dazu kommt eine verstärkte Beanspruchung der am Eintrittsstutzen des Ventils angeschlossenen Druckleitung durch die häufigen Druckstösse infolge des abrupten Schliessvorganges. Auch die etwas langsamere Bewegung des Verschlussteils bei Auftreten einer Störung ist für die Prüfung auf Funktionstüchtigkeit noch zu schnell.

Der Erfindung liegt die Aufgabe zugrunde, ein druckmediumbetätigtes Ventil der eingangs genannten Art so zu verbessern, dass es — unter Beibehaltung der raschen Beweglichkeit seines Verschlussteils im Normalbetrieb — auf einfache, sichere und kostengünstige Weise einer Funktionstüchtigkeitsprüfung unterzogen werden kann, bei der sein Verschlussteil mit wesentlich kleinerer Geschwindigkeit in die Sicherheitsstellung gebracht wird als beim bekannten Ventil bei Auftreten einer Störung.

Diese Aufgabe wird erfindungsgemäss durch die Merkmale des Kennzeichens des Anspruchs 1 gelöst.

Durch das Anbringen der dritten Verbindungsleitung, deren Durchflussquerschnitt und -widerstand für die beim Prüfbetrieb gewünschte Geschwindigkeit des Verschlussteils dimensioniert ist, ist es möglich, im Normalbetrieb des Ventils dessen Verschlussteil — wie bisher — mit der gewünschten hohen Geschwindigkeit, beim Prüf- oder Testbetrieb jedoch mit wesentlich kleinerer Geschwindigkeit zu bewegen, so dass im letztgenannten Fall die Ventilsitzflächen geschont werden. Damit ist auch bei häufigem Testbetrieb die Gefahr von Undichtheiten des Ventils eliminiert und dessen Lebensdauer erhöht. Besonders vorteilhaft ist dabei, dass dies auf konstruktiv einfache Weise erreicht wird, weil keine zusätzlichen Steuerventile notwendig sind. Die dritte Verbindungsleitung kann zwischen der ersten und der zweiten Verbindungsleitung oder zwischen den beiden Entlastungsleitungen angebracht sein oder auch in einer die beiden Kolbenräume verbindenden Bohrung in Kolben bestehen, so dass für den Konstrukteur eine grosse Freiheit bei der Gestaltung des Ventils besteht. Ein weiterer Vorteil ist darin zu sehen, dass sich das Verhalten des Ventils beim Testbetrieb vorausberechnen lässt.

Die Zusammenschaltung der Steuerventile nach Anspruch 2 ist sowohl im Normal- wie im Testbetrieb anwendbar und erlaubt für beide Betriebsarten ein gleichzeitiges Betätigen von jeweils zwei Steuerventilen mit einer einzigen Steuerleitung. Zusätzlich reduziert die paarweise Zusammenschaltung der Steuerventile die Fehlermöglichkeiten beim Betätigen des Ventils.

Die Ausführungsform nach Anspruch 3 ermöglicht es, bei Drucklosigkeit im Druckmediumsystem, das Verschlussteil des Ventils mit Hilfe von Fremdmedium in die Arbeitsstellung zu bewegen. Eine besonders einfache, sichere und kostengünstige Zufuhr von Fremdmedium lässt sich nach dem Merkmal des Anspruchs 4 verwirklichen, während die Vorbelastung gemäss dem Anspruch 5 das Verhalten der Fremdmediumzufuhr im drucklosen Zustand des Ventils eindeutig festlegt, so dass unerwünschte Stellungen des Verschlussteils des doppeltwirkenden Rückschlagventils vermieden werden.

Die Steuerventilanordnung nach Anspruch 6 sichert die Kolbenräume gegen jegliche unerwünschte Beaufschlagung durch Druckmedien, womit eine besonders präzise Steuerung des Ventils, auch während der Funktionsprüfung, möglich wird. Mit präziser Steuerung oder Steuerungsgenauigkeit ist die Grösse des Streubereichs gemeint, innerhalb dem die Schliess- und Oeffnungszeiten variieren können. Die Einhaltung von sehr kleinen Streubereichen ist deswegen sehr wichtig, weil aus eventuellen Abweichungen von der normalen Schliesszeit wichtige Schlüsse über die Reibungs- und Dichtheitsverhältnisse innerhalb des Ventils gezogen werden können.

Die Steuerungsgenauigkeit wird durch das Merkmal nach Anspruch 7 nochmals erhöht, indem die Drosselstelle in der ersten Verbindungsleitung eine bessere Vorausberechnung und Eichung der hindurchfliessenden Druckmediummenge erlaubt.

Durch die Anordnung gemäss Anspruch 8 wird der Druckmediumfluss im Testbetrieb unabhängig von dem für den Normalbetrieb optimierten Druckmediumfluss durch die Drosselstelle in der ersten Verbindungsleitung gemacht. Dank der Drosselstelle in der dritten Verbindungsleitung gemäss Anspruch 9 kann der für den Testbetrieb nötige Druckmediumfluss sehr genau vorausberechnet und geeicht werden, so dass die nötige Zeit zum Uebergang in die Sicherheitsstellung des Verschlussteils im Prüfbetrieb mit sehr hoher Genauigkeit im voraus bestimmt werden kann.

Durch das Merkmal des Anspruchs 10 wird der aus dem ersten Kolbenraum austretende Druckmediumfluss beim Uebergang des Ventils in die Arbeitsstellung rechnerisch besser erfassbar, und die Eichbarkeit des in der Entlastungsleitung fliessenden Mediumstromes wird gesteigert. Damit wird das Verhalten des Ventils während des Uebergangs in die Arbeitsstellung — sowohl im Prüf- wie im Normalbetrieb — besser beherrschbar. Ein zusätzlicher Vorteil ergibt sich noch dadurch, dass bei der Wahl einer genügend starken Drosselung es möglich wird, das Ventil durch ständige Zufuhr von Druckmittel in der Sicherheitsstellung zu halten, selbst im Falle eines Versagens oder eines Abreissens des Steuerventils in der betreffenden Entlastungsleitung.

Um zu vermeiden, dass das aus dem Servokolben, der Stange und dem Verschlussteil bestehende bewegliche System mit zu grosser Geschwindigkeit in den beiden Endstellungen auf die zugehörige Gegenfläche auftritt, ist gemäss Anspruch 11 die am ersten und am zweiten Hohlraumabschnitt angeschlossene dritte Verbindungsleitung zylinderseitig des in der ersten Verbindungsleitung befindlichen Steuerventils und des in der zweiten Verbindungsleitung befindlichen Steuerventils mit dem betreffenden Hohlraumabschnitt verbunden. Hierdurch wird es möglich, den Verschlussteil bei seiner Bewegung in die beiden Entstellungen zu bremsen, so dass das bewegliche System mit genügend niedriger Geschwindigkeit, d. h. ohne Beschädigungen zu verursachen, auf die zugehörige Gegenfläche auftritt. Von besonderem Vorteil ist, dass die Bremswirkung erreicht wird, ohne dass zusätzliche bewegliche Teile, also z. B. Ventile, benötigt werden.

Einige Ausführungsbeispiele der Erfindung sind in der folgenden Beschreibung anhand der Zeichnung näher erläutert. Es zeigen in schematischer Form :
Fig. 1 ein druckmediumbetätigtes Ventil nach der Erfindung, im Schnitt,
Fig. 2a bis d  vier gegenüber Fig. 1 vereinfachte Ausführungsformen des erfindungsgemässen Ventils,
Fig. 3a bis d  vier Ausführungsformen des erfindungsgemässen Ventils, bei denen die Arbeitsstellung gleich der Schliesstellung ist,
Fig. 4 eine gegenüber Fig. 2a abgewandelte Ausführungsform und
Fig. 5 eine weitere Ausführungsform.

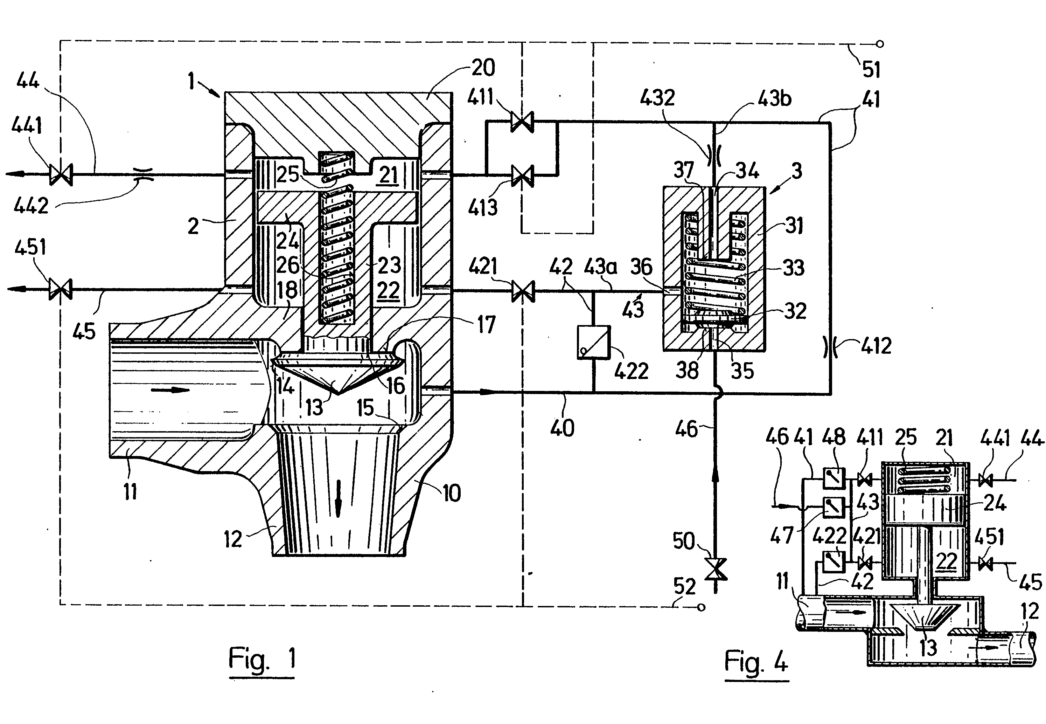

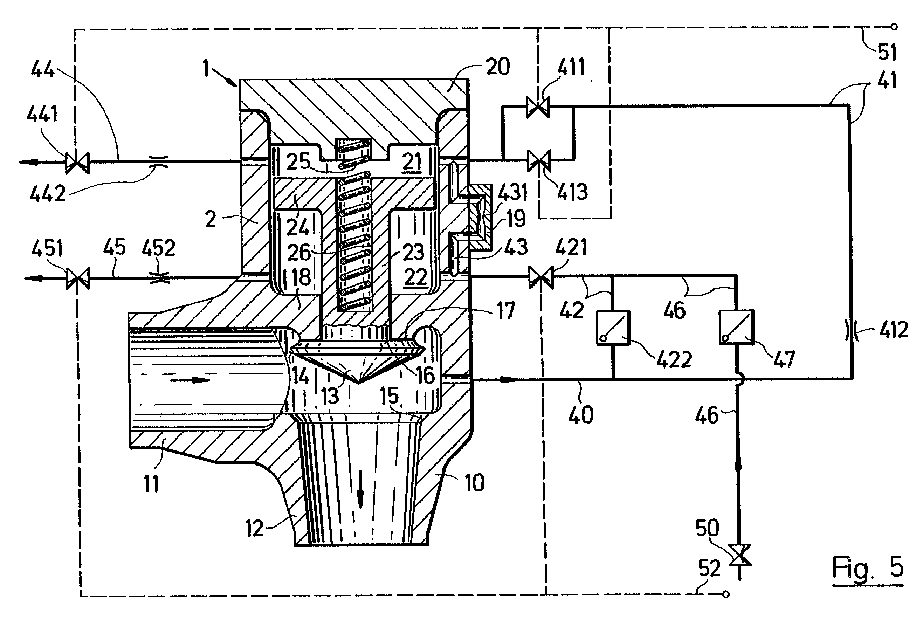

Die in Fig. 1 gewählte Darstellung dient zur vereinfachten Erläuterung, denn bei der praktischen Ausführung des Ventils können alle Steuer- und Rückschlagventile sowie die Leitungen mit den Drosselstellen innerhalb der Kontur des Ventils enthalten sein.

Nach Fig. 1 weist ein Ventil 1 ein Gehäuse 10 und einen Deckel 20 auf, der mittels nicht gezeichneter Schrauben am Gehäuse 10 dicht befestigt ist. Druckmedium aus einer nicht gezeigten Druckmittelquelle strömt über einen Eintrittsstutzen 11 des Gehäuses 10 diesem zu und verlässt das Ventil über einen Austrittsstutzen 12. Ein Verschlussteil 13 ist bewegbar im Druckbereich des Eintrittsstutzens 11 angeordnet und weist auf der dem Austrittsstutzen 12 zugewandten Seite eine konisch ausgebildete Dichtfläche 14 auf, die beim Schliessen des Ventils 1 auf einen Dichtsitz 15 im Gehäuse 10 zu liegen kommt. Auf der dem Austrittsstutzen 12 abgewandten Seite des Verschlussteils 13 weist dieser einen Rücksitz 16 auf, der in der ganz offenen Stellung des Verschlussteils 13 an einer Anschlagfläche 17 im Gehäuse 10 dicht anliegt.

Das Gehäuse 10 weist einen Zylinder 2 auf, der sich gegen den Deckel 20 hin erstreckt und in dem ein Servo-Kolben 24 bewegbar angeordnet ist. Der Kolben 24 ist mittels einer Stange 23 mit dem Verschlussteil 13 fest verbunden und unterteilt den vom Zylinder 2 umschlossenen Raum in einen ersten Kolbenraum 21 und einen zweiten Kolbenraum 22. Die Stange 23 durchstösst einen Zylinderboden 18, der den zweiten Kolbenraum vom Druckbereich des Eintrittsstutzens 11 in jeder Stellung des Verschlussteils 13 trennt. Im Boden 18 sind nicht gezeichnete, die Stange 23 umgebende Dichtungsmittel vorgesehen.

Im ersten Kolbenraum 21 ist eine Schraubendruckfeder 25 vorgesehen, die sich zwischen dem Deckel 20 und dem Boden einer Bohrung 26 abstützt, die durch den Kolben 24 hindurch bis in die Stange 23 hineinreicht.

Der Druck im Druckbereich des Eintrittsstutzens 11 wird auf eine am Gehäuse 10 angeschlossene Verteilleitung 40 übertragen. Die Verteilleitung 40 ist mittels einer ersten Verbindungsleitung 41 mit dem ersten Kolbenraum 21 und mittels einer zweiten Verbindungsleitung 42 mit dem zweiten Kolbenraum 22 verbunden. Die erste Verbindungsleitung 41 und die zweite Verbindungsleitung 42 sind über eine dritte Verbindungsleitung 43 miteinander verbunden, die aus zwei Abschnitten 43a und 43b besteht.

Ueber eine ein Magnetsteuerventil 441 enthaltende Entlastungsleitung 44 ist der erste Kolbenraum 21 mit einer Druckmittelsenke, hier der Atmosphäre, verbunden. Zwischen dem Steuerventil 441 und dem ersten Kolbenraum 21 weist die Entlastungsleitung 44 eine Drosselstelle 442 auf. Der zweite Kolbenraum 22 ist über eine Entlastungsleitung 45 mit einer Druckmittelsenke, hier ebenfalls der Atmosphäre, verbunden. Die Entlastungsleitung 45 weist ein Magnetsteuerventil 451 auf.

Die erste Verbindungsleitung 41 enthält zwei parallelgeschaltete Magnetsteuerventile 411 und 413, die zwischen der Anschlussstelle des Abschnitts 43b und dem ersten Kolbenraum 21 liegen. Ausserdem enthält sie eine Drosselstelle 412, die zwischen der Anschlussstelle an der Verteilleitung 40 und derjenigen des Abschnitts 43b angeordnet ist. Eine Drosselstelle 432 befindet sich auch im Abschnitt 43b.

Die zweite Verbindungsleitung 42 weist ein Magnetsteuerventil 421 auf, das zwischen dem zweiten Kolbenraum 22 und der Anschlussstelle des Abschnitts 43a liegt. Sie weist ferner ein in Richtung zum zweiten Kolbenraum 22 durchströmbares Rückschlagventil 422 auf, das sich zwischen den Anschlussstellen am Abschnitt 43a und an der Verteilleitung 40 befindet.

Zwischen den Abschnitten 43a und 43b der dritten Verbindungsleitung ist ein doppeltwirkendes Rückschlagventil 3 vorgesehen, das aus einem Gehäuse 31, einem Verschlussteller 32 und einer Feder 33 besteht. Das Gehäuse 31 ist über eine Bohrung 34 mit dem Abschnitt 43b verbunden, wogegen am anderen Ende dieses Gehäuses eine mit einer Fremdmediumleitung 46 verbundene Bohrung 35 vorgesehen ist. Das Gehäuse 31 enthält noch eine dritte Bohrung 36, die zwischen den beiden Bohrungen 34 und 35 angebracht ist und mit dem Abschnitt 43a verbunden ist. Die Feder 33 belastet den Verschlussteller 32 in Richtung auf die Bohrung 35. Auf jeder der beiden Stirnseiten weist der Verschlussteller 32 eine Dichtfläche auf, die in der einen Extremstellung des Tellers mit einem Dichtsitz 37 an der Bohrung 34 und in der anderen Extremstellung mit einem Dichtsitz 38 an der Bohrung 35 zusammenwirken. Der im Gehäuse 31 zwischen zwei Extremstellungen bewegbare Verschlussteller 32 sperrt entweder die Bohrung 35 ab, wobei die Bohrungen 34 und 36 miteinander kommunizieren (gezeichnete Stellung in Fig. 1), oder er sperrt die Bohrung 34 ab, wobei die Bohrungen 35 und 36 miteinander kommunizieren.

Die Magnetsteuerventile 441, 411 und 413 werden gleichzeitig durch eine einzige Steuerleitung 51 betätigt, wobei bei stromloser Leitung 51 das Magnetsteuerventil 441 geschlossen ist und die Magnetsteuerventile 411 und 413 offen sind. Die Magnetsteuerventile 451 und 421 werden ebenfalls durch eine einzige Steuerleitung 52 simultan betätigt, indem bei stromloser Leitung 52 das Magnetsteuerventil 451 offen bzw. das Magnetsteuerventil 421 geschlossen ist.

Das beschriebene Ventil funktioniert wie folgt:

Bei offenem Ventil 1 strömt aus der Druckmittelquelle, z. B. einem Dampferzeuger, Druckmedium über den Eintrittsstutzen 11 in das Gehäuse 10 und verlässt dieses über den Austrittsstutzen 12. Im Normalbetrieb stehen die Magnetsteuerventile 441, 411 und 413 über die Steuerleitung 51 unter Strom, so dass das Magnetsteuerventil 441 offen ist und die Magnetsteuerventile 411 und 413 geschlossen sind. Die Steuerleitung 52 ist dagegen im Normalbetrieb stromlos und somit sind das Magnetsteuerventil 451 offen und das Magnetsteuerventil 421 geschlossen. Der erste Kolbenraum 21 ist dabei über das offene Magnetsteuerventil 441, die Drosselstelle 442 und die Entlastungsleitung 44 mit der Atmosphäre verbunden, ebenso wie der zweite Kolbenraum 22 wegen des offenen Magnetsteuerventils 451 in der Entlastungsleitung 45. Infolgedessen wirkt keine Druckdifferenz auf den Kolben 24; die resultierende Kraft aus dem Produkt aus dem atmosphärischen Druck mal die unterschiedlichen Kolbenoberflächen in den beiden Kolbenräumen 21 und 22 ist vernachlässigbar klein. Demgegenüber ist die resultierende Kraft aus dem Produkt aus dem Mediumdruck mal die Differenz der beiden Stirnflächen des Verschlussteils 13 gross genug, um den Verschlussteil gegen die Kraft der Schraubendruckfeder 25 in Offenstellung zu halten, wobei der Rücksitz 16 gegen die Anschlagfläche 17 dicht angepresst wird.

In der Verteilleitung 40, den Verbindungsleitungen 41 und 42, sowie den Abschnitten 43a und 43b herrscht bis zu den Magnetsteuerventilen 411, 413 und 421 hin annähernd der gleiche Mediumdruck wie im Eintrittsstutzen 11. Die Fremdmediumleitung 46 ist drucklos, weil ein Ventil 50 in dieser Leitung die Zufuhr von Fremdmedium absperrt. Im doppeltwirkenden Rückschlagventil 3 wird deshalb der Verschlussteller 32 vom Druck des Mediums im Gehäuse 31 und von der Feder 33 dicht auf den Dichtsitz 38 gepresst.

Das Schliessen des Ventils 1 wird entweder vom Betriebspersonal oder automatisch durch einen Störfall in der Anlage ausgelöst, wobei der Strom in der Steuerleitung 51 abgeschaltet wird. Dadurch schliesst das Magnetsteuerventil 441, und die Magnetsteuerventile 411 und 413 öffnen. In einem Bruchteil von einer Sekunde, der vom Querschnitt der Drosselstelle 412 abhängig ist, strömt Druckmedium über die Leitungen 40 und 41 in den ersten Kolbenraum 21. Dadurch wird der Kolben 24 zusammen mit der Stange 23 und dem Verschlussteil 13 in die Schliess-, d. h. Sicherheitsstellung geschoben. Wird nun die Steuerleitung 51 wieder unter Strom gesetzt, so öffnet das Magnetsteuerventil 441, und es schliessen die Magnetsteuerventile 411 und 413, so dass der Druck im ersten Kolbenraum 21 auf Atmosphärendruck sinkt. Gleichzeitig mit der Stromzufuhr zur Leitung 51 wird auch die Steuerleitung 52 unter Strom gesetzt, so dass das Magnetsteuerventil 451 schliesst und das Magnetsteuerventil 421 öffnet. Damit gelangt Druckmedium in den zweiten Kolbenraum 22, wodurch eine Bewegung des Verschlussteils 13 in Oeffnungsrichtung eingeleitet wird. Nach Erreichen der Offenstellung wird die Steuerleitung 52 wieder stromlos, so dass das Magnetsteuerventil 451 öffnet und das Magnetsteuerventil 421 schliesst. Damit sind die Normalbetriebsbedingungen wieder hergestellt. Durch die Drosselstelle 442 wird die je Sekunde aus dem ersten Kolbenraum 21 ausströmende Mediummenge begrenzt, um die Oeffnungszeit des Ventils 1 zu vergrössern und dadurch Druckstösse in den Druckleitungen der Anlage zu vermeiden. Die Drosselstelle 442 hat ferner die wichtige Aufgabe, bei Ausfall und sogar totaler Zerstörung des Magnetsteuerventils 441, das Schliessen und Geschlossenhalten des Ventils 1 zu ermöglichen, indem sie eine Druckstauung im ersten Kolbenraum 21 unter ständiger Nachfüllung von Druckmedium über die dann geöffneten Magnetsteuerventile 411 und 413 gestattet.

Die Funktionstüchtigkeit des Ventils 1 wird in zwei Schritten geprüft. In einem ersten Schritt wird die Steuerleitung 52 unter Strom gesetzt, womit das Magnetsteuerventil 451 geschlossen und das Magnetsteuerventil 421 geöffnet wird. In der Folge füllt sich der zweite Kolbenraum 22 mit Druckmedium, das ein Druckpolster bildet. In einem zweiten Schritt wird die Steuerleitung 51 stromlos gemacht, woraufhin das Magnetsteuerventil 441 schliesst und die Magnetsteuerventile 411 und 413 öffnen. Der erste Kolbenraum 21 ist jetzt auch von Druckmedium beaufschlagt, und es herrscht in den Kolbenräumen 21 und 22 annähernd der gleiche Druck wie im Eintrittsstutzen 11. Die vom Druck her auf die beweglichen Teile wirkenden Kräfte sind somit weitgehend ausgeglichen und allein die Kraft der Schraubendruckfeder 25 versucht, das Ventil 1 zu schliessen. Dabei fliesst Druckmedium aus dem zweiten Kolbenraum 22 über die zweite Verbindungsleitung 42, den Abschnitt 43a der dritten Verbindungsleitung 43, das doppeltwirkende Rückschlagventil 3, die Drosselstelle 432 im Abschnitt 43b und die erste Verbindungsleitung 41 in den ersten Kolbenraum 21, wobei das Ventil 1 langsam schliesst. Die Schliessgeschwindigkeit ist vor allem durch die von der Drosselstelle 432 durchgelassene Druckmittelmenge je Zeiteinheit bestimmt. Ein Ausfliessen von Druckmedium aus dem zweiten Kolbenraum 22 in die Verteilleitung 40 wird durch das Rückschlagventil 422 verhindert. Bei inkompressiblen Druckmedien wird die nötige Zusatzmenge zum Füllen des ersten Kolbenraums 21 über die Leitungen 40 und 41 aus dem Druckbereich des Eintrittsstutzens 11 zugeführt.

Wesentlich beim Testbetrieb sind : erstens, die Vorausbildung eines Druckpolsters im zweiten Kolbenraum 22, wodurch ein kontrolliertes Schliessen des Ventils 1 wesentlich erleichtert wird, und zweitens die Festlegung der Durchflussmenge aus dem zweiten Kolbenraum 22 zum ersten Kolbenraum 21 mittels der einzigen Drosselstelle 432, wodurch die Schliesszeit des Ventils 1 sehr genau festgelegt werden kann. Die Schliesszeit kann auf bekannte Weise gemessen werden und eventuelle Abweichungen des Messwertes von einem Sollwert können wichtige Informationen in bezug auf etwaige Defekte im Ventil 1 liefern, wie z. B. Undichtheiten, Verschmutzungen oder Deformationen.

Eine Berührung der Dichtfläche 14 des Verschlussteils 13 mit dem Dichtsitz 15 kann während des Testbetriebes vermieden werden, indem kurz vor Erreichen der Schliessstellung — unter Berücksichtigung der Trägheit des beweglichen Systems — Strom in die Steuerleitung 51 eingespiesen wird. Dadurch wird das Magnetsteuerventil 441 geöffnet und die Magnetsteuerventile 411 und 413 geschlossen, so dass der Druck im ersten Kolbenraum 21 auf Atmosphärendruck sinkt und das Verschlussteil 13 noch knapp vor einer Berührung des Dichtsitzes 15 seine Bewegungsrichtung umkehrt, so dass das Ventil 1 öffnet. Dadurch werden frühzeitige Abnützungsschäden an den Dichtflächen vollständig vermieden. Zur völligen Wiederherstellung des Normalbetriebes wird nun die Stromzufuhr zur Steuerleitung 52 unterbrochen, wodurch das Magnetsteuerventil 451 öffnet und das Magnetsteuerventil 421 schliesst. Der Druck im zweiten Kolbenraum 22 gleicht sich dann ebenfalls dem Atmosphärendruck an.

Bei Drucklosigkeit im Druckbereich des Eintrittsstutzens 11 herrscht in allen übrigen Leitungen und Räumen des Ventils 1 ebenfalls Drucklosigkeit. Mittels der Schraubendruckfeder 25 wird dann das Ventil 1 geschlossen gehalten, und durch die Feder 33 verharrt der Verschlussteller 32 des doppeltwirkenden Rückschlagventils 3 in seiner in Fig. 1 gezeichneten, normalen Stellung, in der die Fremdmediumleitung 46 abgesperrt ist. Das Ventil 1 kann dann nur durch Einführen von Fremdmedium über der Fremdmediumleitung 46 geöffnet werden. Zu diesem Zweck wird zuerst die Steuerleitung 52 unter Strom gesetzt, so dass das Magnetsteuerventil 451 schliesst und das Magnetsteuerventil 421 öffnet. Durch Oeffnen des Ventils 50 wird die Fremdmediumleitung 46 an eine nicht gezeigte Fremdmediumquelle angeschlossen. Der Fremdmediumdruck wirkt über die Bohrung 35 auf den Verschlussteller 32 und verschiebt diesen gegen die Wirkung der Feder 33 bis zum Dichtsitz 37 bei der Bohrung 34. Das Fremdmedium fliesst nun über die Bohrung 36, den Abschnitt 43a, und die zweite Verbindungsleitung 42 in den zweiten Kolbenraum 22, wobei der Kolben 24 und damit der Verschlussteil 13 in die Oeffenstellung geschoben werden. Der Verschlussteller 32 und das Rückschlagventil 422 verhindern dabei ein Eindringen von Fremdmedium in den Abschnitt 43b und die Leitungen 41 und 40. Das Schliessen des Ventils 50 und/oder die Zufuhr von Druckmedium aus dem Eintrittsstutzen 11 mit einem höheren Druck als dem des Fremdmediums zusammen mit einem Unterbrechen der Stromzufuhr zur Steuerleitung 52, stellt den Normalbetrieb wieder her.

Es können auch mehr als eine Fremdmediumquelle wahlweise an die Fremdmediumleitung 46 oder über je eine eigene Fremdmediumleitung mit einem doppeltwirkenden Rückschlagventil an die dritte Verbindungsleitung 43 angeschlossen werden.

Aus Sicherheitsgründen können verschiedene Redundanzen am Ventil 1 vorgesehen werden. In der Ausführungsform nach Fig. 1 sind nur die parallelgeschalteten Magnetsteuerventile 411 und 413 als Beispiel einer solchen Redundanz vorhanden, weil dort die Sicherheitsanforderungen besonders gross sind. Je nach Bedarf und Raumverhältnissen können aber weitere Redundanzen vorgesehen werden, z. B. auch zwei parallele Schraubendruckfedern 25.

Es ist ebenfalls möglich, in besonderen Fällen eine Drosselstelle auch in die Entlastungsleitung 45 des zweiten Kolbenraumes 22 einzubauen, um die Steuerungsgenauigkeit des Ventils noch zu verfeinern.

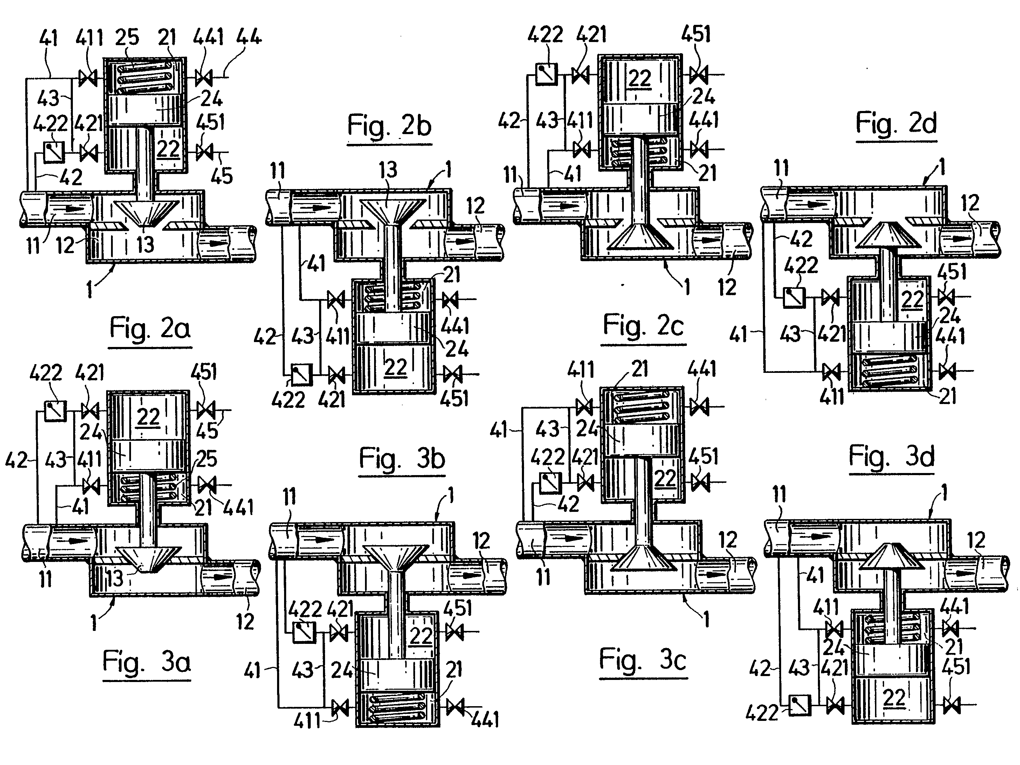

Bei den Ausführungsbeispielen nach Fig. 2a bis 2d ist die Erfindung in ihrer einfachsten Form verwirklicht, wobei — wie in Fig. 1 — die Offenstellung des Ventils 1 seine Arbeitsstellung ist. In allen vier Beispielen fehlt eine Fremdmediumzufuhr.

Die Ausführungsbeispiele nach Fig. 3a bis 3d entsprechen in ihrer Einfachheit denjenigen nach Fig. 2a bis 2d, jedoch sind sie geschlossen in ihrer Arbeitsstellung und die Offenstellung ist ihre Sicherheitsstellung.

In den Fig. 2a bis 2d und 3a bis 3d befinden sich die Ventile 1 in ihrer Arbeitsstellung. Ihre Funktionsweise ergibt sich aus der Beschreibung zu Fig. 1. Lediglich die Beispiele nach Fig. 2b, 3c und 3d weisen eine Besonderheit auf, indem sie in der Arbeitsstellung nur bleiben, wenn der zweite Kolbenraum 22 unter Druck ist. Das bedeutet — im Gegensatz zu den übrigen Beispielen — dass jeweils in der Arbeitsstellung des Ventils 1 in Fig. 2b, 3c und 3d das Magnetsteuerventil 451 geschlossen und das Magnetsteuerventil 421 offen sein müssen und dass beim Uebergang in die Sicherheitsstellung das Magnetsteuerventil 451 geöffnet und das Magnetsteuerventil 421 geschlossen werden. Dafür müssen diese Magnetsteuerventile 451 und 421 bei der Funktionsprüfung nicht betätigt werden.

Die Beispiele nach Fig. 2a bis 2d und 3a bis 3d zeigen also die Vielfältigkeit der Anwendungsmöglichkeiten der Erfindung, wenn ein druckmediumbetätigtes Ventil mit zwei verschiedenen Oeffnungs- oder Schliesszeiten betätigt werden soll.

Das Ausführungsbeispiel nach Fig. 4 entspricht weitgehend dem Beispiel nach Fig. 2a, wobei jedoch eine Fremdmediumleitung 46 vorgesehen ist, die über ein Rückschlagorgan 47 an die dritte Verbindungsleitung 43 angeschlossen ist. Das Rückschlagorgan 47 ist in Richtung auf die Leitung 43 durchströmbar. Ausserdem ist ein Rückschlagorgan 48 in der ersten Verbindungsleitung 41 vorgesehen, und zwar stromoberhalb der Anschlussstelle der dritten Verbindungsleitung 43. Das Rückschlagorgan ist in Richtung auf die eben genannte Anschlussstelle durchströmbar. Anstelle der Rückschlagorgane 47 und 48 können auch normale Abschlussorgane verwendet werden. In entsprechender Weise lassen sich auch die Ausführungsformen nach Fig. 2b bis 2d sowie Fig. 3a bis 3d mit einer Fremdmediumzufuhr versehen.

Gemäss Fig. 5 sind die beiden Hohlraumabschnitte über eine dritte Verbindungsleitung 43 miteinander verbunden, die mit ihren beiden Mündungen zylinderseitig der in der ersten Verbindungsleitung 41 vorgesehenen Steuerventile 411 und 413 bzw. des in der zweiten Verbindungsleitung 42 vorgesehenen Steuerventils 421 liegt. Bei diesem Ausführungsbeispiel erstreckt sich die dritte Verbindungsleitung zum grössten Teil durch die Wand des Zylinders 2. Der die Drosselstelle 431 aufweisende Abschnitt der dritten Verbindungsleitung 43 ist in einem Wandteil 19 ausgebildet, der von aussen am Zylinder 2 mittels nicht näher dargestellter Schrauben lösbar befestigt ist. Dies erlaubt ein leichtes Auswechseln der Drossel, sei es zwecks Ersetzens durch eine gleichgrosse Drossel oder sei es zwecks Ersetzens durch eine Drossel mit grösserem oder kleinerem Durchgangsquerschnitt.

Wenn das Ventil gemäss Fig. 5 offen ist, liegen die gleichen Verhältnisse vor, wie sie beim Ventil nach Fig. 1 beschrieben worden sind. Das Schliessen des Ventils 1 nach Fig. 5 wird entweder vom Betriebspersonal oder automatisch durch einen Störfall in der Anlage ausgelöst, wobei der Strom in der Steuerleitung 51 abgeschaltet wird. Dadurch schliesst das Magnetsteuerventil 441, und die Magnetsteuerventile 411 und 413 öffnen. In einem Bruchteil von einer Sekunde, der vom Querschnitt der Drosselstelle 412 abhängig ist, strömt Druckmedium über die Leitungen 40 und 41 in den ersten Kolbenraum 21. Dadurch wird der Servokolben 24 zusammen mit der Stange 23 und dem Verschlussteil 13 nach unten verschoben, d. h. in Richtung der Schliess- oder Sicherheitsstellung. Dabei wirkt zunächst der volle Druck des Druckmittels im ersten Kolbenraum 21 auf den Kolben 24, während dieser Druck wegen der Drosselstelle 431 in der dritten Verbindungsleitung 43 im zweiten Kolbenraum 22 noch nicht wirksam ist. Der Kolben 24 bewegt sich also zuerst relativ rasch abwärts, wobei sich der zweite Kolbenraum 22 verkleinert und sich in diesem ein Druck einstellt, der zwischen dem Druck im ersten Kolbenraum und dem Atmosphärendruck liegt. Etwas Druckmedium entweicht über die Entlastungsleitung 45. Im Laufe der weiteren Bewegung des Kolbens 24 dringt auch Druckmittel über die dritte Verbindungsleitung 43 in den zweiten Kolbenraum 22, so dass sich der Druck in diesem Kolbenraum noch etwas erhöht. Hierdurch wird die Kolbenbewegung anfänglich leicht und dann zunehmend gebremst, d. h. das bewegliche System gelangt mit konstant abnehmender Geschwindigkeit in die untere Endstellung. Der Verschlussteil 13 setzt also auf die Sitzfläche 15 auf, ohne dass an dieser Sitzfläche oder an der Dichtfläche 14 Schäden auftreten können. Die Bremswirkung wird durch die Dimensionierung der Querschnitte der Drosselstellen 431 und 452 bestimmt.

Wird nun die Steuerleitung 51 wieder unter Strom gesetzt, so öffnet das Magnetsteuerventil 441, und es schliessen die Magnetsteuerventile 411 und 413, so dass der Druck im ersten Kolbenraum 21 auf Atmosphärendruck sinkt. Gleichzeitig mit der Stromzufuhr zur Leitung 51 wird auch die Steuerleitung 52 unter Strom gesetzt, so dass das Magnetsteuerventil 451 schliesst und das Magnetsteuerventil 421 öffnet. Damit gelangt Druckmedium in den zweiten Kolbenraum 22, wodurch eine Bewegung des Verschlussteils 13 in Oeffnungsrichtung eingeleitet wird. Bei dieser Oeffnungsbewegung tritt eine Bremswirkung des beweglichen Systems in gleicher Weise auf, wie dies zuvor für die Abwärtsbewegung beschrieben worden ist.

Nach Erreichen der Offenstellung wird die Steuerleitung 52 wieder stromlos, so dass das Magnetsteuerventil 451 öffnet und das Magnetsteuerventil 421 schliesst. Damit sind die Normalbetriebsbedingungen wieder hergestellt.

Die Drosselstelle 442 hat ferner die wichtige Aufgabe, bei Ausfall und sogar totaler Zerstörung des Magnetsteuerventils 441, das Schliessen und Geschlossenhalten des Ventils 1 zu ermöglichen, indem sie eine Druckstauung im ersten Kolbenraum 21 unter ständiger Nachfüllung von Druckmedium über die dann geöffneten Magnetsteuerventile 411 und 413 gestattet.

**Patentansprüche**

1. Druckmediumbetätigtes Ventil (1) mit einem Gehäuse (10) das einen mit einer Druckmittelquelle verbundenen Eintrittsstutzen (11), einen Austrittsstutzen (12) und einen vom durchströmten Ventilraum abgeschirmten Zylinder (2) aufweist, mit einem im Druckbereich des Eintrittsstutzens (11) angeordneten Verschlussteil (13), das mittels einer Stange (23) mit einem im Zylinder (2) verschiebbar angeordneten Kolben (24) verbunden ist, wobei der Kolben (24) den Zylinder (2) in einen beim Uebergang von einer Arbeits- in eine Sicherheitsstellung sich vergrössernden, ersten Kolbenraum (21) und einen beim Uebergang von der Arbeits- in die Sicherheitsstellung sich verkleinernden, zweiten Kolbenraum (22) unterteilt, mit mindestens einer im Zylinder (2) angeordneten Feder (25), die den Kolben (24) mit der Stange (23) und dem Verschlussteil (13) in Richtung auf die Sicherheitsstellung des Ventils (1) belastet, mit zwei je ein Steuerventil (441, 451) enthaltenden Entlastungsleitungen (44, 45), die an den beiden Kolbenräumen (21, 22) angeschlossen sind und zu mindestens einer Druckmittelsenke, vorzugsweise der Atmosphäre führen, mit einer ein Steuerventil (411) enthaltenden ersten Verbindungsleitung (41) zwischen dem Druckbereich des Eintrittsstutzens (11) und dem ersten Kolbenraum (21) und mit einer ein Steuerventil (421) enthaltenden zweiten Verbindungsleitung (42) zwischen dem Druckbereich des Eintrittsstutzens (11) und dem zweiten Kolbenraum (22), dadurch gekennzeichnet, dass die zweite Verbindungsleitung (42) ein in Richtung zum zweiten Kolbenraum (22) durchströmbares Rückschlagventil (422) aufweist, dass eine dritte Verbindungsleitung (43) vorgesehen ist, die einen ersten Hohlraumabschnitt mit einem zweiten Hohlraumabschnitt verbindet, wobei der erste Hohlraumabschnitt sich über das Innere der ersten Verbindungsleitung (41), den ersten Kolbenraum (21) und das Innere der an diesem Raum angeschlossenen Entlastungsleitung (44) bis zum zylinderseitigen Ende des in dieser Entlastungsleitung befindlichen Steuerventils (441) erstreckt und der zweite Hohlraumabschnitt vom zylinderseitigen Ende des Rückschlagventils (422) in der zweiten Verbindungsleitung (42) über den zweiten Kolbenraum (22) bis zum zylinderseitigen Ende des Steuerventils (451) in der an den zweiten Kolbenraum (22) angeschlossenen Entlastungsleitung (45) reicht, und dass die dritte Verbindungsleitung (43) so dimensioniert ist, dass beim Durchführen einer Funktionstüchtigkeitsprüfung der Verschlussteil (13) sich mit wesentlich kleinerer Geschwindigkeit in die Sicherheitsstellung bewegt als bei Normalbetrieb.

2. Ventil nach Anspruch 1, dadurch gekennzeichnet, dass das Steuerventil (411) in der ersten Verbindungsleitung (41) und das Steuerventil (441) in der am ersten Kolbenraum (21) angeschlossenen Entlastungsleitung (44) so zusammengeschaltet sind, dass, wenn das eine geschlossen ist, das andere offen ist, und umgekehrt, und dass das Steuerventil (421) in der zweiten Verbindungsleitung (42) mit dem Steuerventil (451) in der am zweiten Kolbenraum (22) angeschlossenen Entlastungsleitung (45) auch so zusammengeschaltet ist, dass das eine geschlossen ist, wenn das andere offen ist, und umgekehrt.

3. Ventil nach Anspruch 1 oder 2, dadurch gekennzeichnet, dass an einen Druckbereich — bestehend aus dem zweiten Hohlraumabschnitt, dem Inneren der dritten Verbindungsleitung (43) und einem den ersten Kolbenraum (21) nicht einschliessenden Teil des ersten Hohlraumabschnitts, welcher Teil beidseitig der Anschlussstelle der dritten Verbindungsleitung (43) durch je ein Abschlussorgan (48, 411) begrenzt ist — eine Fremdmediumleitung (46) angeschlossen ist, die ein Abschlussorgan (50), vorzugsweise ein in Richtung zum Druckbereich durchströmbares Rückschlagventil, aufweist.

4. Ventil nach Anspruch 1 oder 2, dadurch gekennzeichnet, dass die dritte Verbindungsleitung (43) mittels eines doppeltwirkenden Rückschlagventils (3) an eine Fremdmediumleitung (46) angeschlossen ist, wobei das doppeltwirkende Rückschlagventil (3) entweder den ersten Hohlraumabschnitt oder die Fremdmediumleitung (46) mit dem zweiten Hohlraumabschnitt verbindet, und zwar abhängig vom Verhältnis des Druckes im ersten Hohlraumabschnitt zu dem in der Fremdmediumleitung (46).

5. Ventil nach Anspruch 4, dadurch gekennzeichnet, dass der Verschlussteil (32) des doppeltwirkenden Rückschlagventils (3) in Richtung zum Abschliessen der Fremdmediumleitung (46) vorbelastet ist, z. B. durch eine Feder (33).

6. Ventil nach einem der Ansprüche 1 bis 5, dadurch gekennzeichnet, dass die Steuerventile, (411, 421) in der ersten und der zweiten Verbindungsleitung (41, 42) zwischen dem Zylinder (2) einerseits und dem zugehörigen Anschluss der dritten Verbindungsleitung (43) an der ersten und der zweiten Verbindungsleitung (41, 42) andererseits angeordnet sind.

7. Ventil nach einem der Ansprüche 1 bis 6, dadurch gekennzeichnet, dass die erste Verbindungsleitung (41) eine Drosselstelle (412) aufweist.

8. Ventil nach Anspruch 7, dadurch gekennzeichnet, dass die dritte Verbindungsleitung (43) an eine Stelle des ersten Hohlraumabschnittes mündet, die zylinderseitig der Drosselstelle (412) liegt.

9. Ventil nach einem der Ansprüche 1 bis 8, dadurch gekennzeichnet, dass die dritte Verbindungsleitung (43) eine Drosselstelle (432) aufweist.

10. Ventil nach einem der Ansprüche 1 bis 9, dadurch gekennzeichnet, dass die am ersten Kolbenraum (21) angeschlossene Entlastungsleitung (44) eine Drosselstelle (442) aufweist.

11. Ventil nach einem der Ansprüche 1 bis 10, dadurch gekennzeichnet, dass die am ersten und am zweiten Hohlraumabschnitt angeschlossene dritte Verbindungsleitung (43) zylinderseitig des in der ersten Verbindungsleitung (41) befindlichen Steuerventils (411) und des in der zweiten Verbindungsleitung (42) befindlichen Steuerventils (421) mit dem betreffenden Hohlraumabschnitt verbunden ist.

12. Ventil nach Anspruch 11, dadurch gekennzeichnet, dass die dritte Verbindungsleitung (43) im Gehäuse (10) verläuft.

13. Ventil nach Anspruch 12, dadurch gekennzeichnet, dass mindestens ein die Drosselstelle (431) aufweisender Abschnitt der dritten Verbindungsleitung (43) in einem von aussen mit dem Gehäuse (10) verbindbarem Wandteil (19) verläuft.

14. Ventil nach einem der Ansprüche 9 bis 13, dadurch gekennzeichnet, dass die am zweiten Kolbenraum (22) angeschlossene Entlastungsleitung (451) eine Drosselstelle (452) aufweist, die mindestens den gleichen Strömungsquerschnitt aufweist wie die Drosselstelle (431) in der dritten Verbindungsleitung (43).

## Claims

1. A pressure-medium operated valve (1) with a housing (10), which has an inlet union (11) connected to a pressure medium source, an outlet union (12) and a cylinder (2) screened from the valve chamber through which the flow passes, with a closure member (13) situated in the pressure zone of the inlet union (11) and connected by a rod (23) to a piston (24) slidable in the cylinder (2), the piston (24) dividing the cylinder (2) into a first piston chamber (21), which enlarges as the closure member moves from a working position into a safety position, and a second piston chamber (22), which diminishes as the closure member moves from the working into the safety position, with at least one spring (25) disposed in the cylinder (2) and biasing the piston (24) with the rod (23) and closure member (13) towards the safety position of the valve (1), with two relief ducts (44, 45) which contain respective control valves (441, 451), are connected to the two piston chambers (21, 22) and lead to at least one pressure medium sink, preferably the atmosphere, with a first connecting duct (41) containing a control valve (411) and situated between the pressure zone of the inlet union (11) and the first piston chamber (21), and with a second connecting duct (42) containing a control valve (421) and situated between the pressure zone of the inlet union (11) and the second piston chamber (22), characterised in that the second connecting duct (42) has a nonreturn valve (422) which allows flow towards the second piston chamber (22), in that a third connecting duct (43) is provided which connects a first cavity portion to a second cavity portion, whereof the first cavity portion extends by way of the interior of the first connecting duct (41), the first piston chamber (21) and the interior of the relief duct (44) connected to this chamber as far as the cylinder end of the control valve (441) situated in this relief duct, and the second cavity portion extends from the cylinder end of the nonreturn valve (422) in the second connecting duct (42) by way of the second piston chamber (22) to the cylinder end of the control valve (451) in the relief duct (45) connected to the second piston chamber (22), and in that the third connecting duct (43) is so designed that when a performance test is carried out the closure member (13) moves at a substantially lower speed into the safety position than during normal operation.

2. A valve as claimed in claim 1, characterised in that the control valve (411) in the first connecting duct (41) and the control valve (441) in the relief duct (44) connected to the first piston chamber (21) are so interconnected that when one is closed, the other is open, and vice versa, and likewise the control valve (421) in the second connecting duct (42) is so interconnected to the control valve (451) in the relief duct (45) connected to the second piston chamber (22) that one is closed when the other is open, and vice versa.

3. A valve as claimed in claim 1 or 2, characterised in that a pressure zone — comprising the second cavity portion, the interior of the third connecting duct (43) and a part of the first cavity portion not including the first piston chamber (21), which part is defined on each side of the junction with the third connecting duct (43) by respective closing means (48, 411) — is connected to an external medium duct (46) which has closing means (50), preferably a nonreturn valve which allows flow towards the pressure zone.

4. A valve as claimed in claim 1 or 2, characterised in that the third connecting duct (43) is connected to an external medium duct (46) by means of a double-acting nonreturn valve (3), which connects either the first cavity portion or the external medium duct (46) to the second cavity portion, depending on the ratio of the pressure in the first cavity portion to that in the external medium duct (46).

5. A valve as claimed in claim 4, characterised in that the closure member (32) of the double-acting nonreturn valve (3) is biased towards closure of the external medium duct (46), for example by a spring (33).

6. A valve as claimed in any of claims 1 to 5, characterised in that the control valves (411, 421) in the first and second connecting ducts (41, 42) are disposed between the cylinder (2) on the one hand and the associated junction between the third connecting duct (43) and the first and second connecting ducts (41, 42) on the other.

7. A valve as claimed in any of claims 1 to 6, characterised in that the first connecting duct (41) comprises a throttle (412).

8. A valve as claimed in claim 7, characterised in that the third connecting duct (43) leads to a place in the first cavity portion which is on the cylinder side of the throttle (412).

9. A valve as claimed in any of claims 1 to 8, characterised in that the third connecting duct (43) comprises a throttle (432).

10. A valve as claimed in any of claims 1 to 9, characterised in that the relief duct (44) connected to the first piston chamber (21) comprises a throttle (442).

11. A valve as claimed in any of claims 1 to 10, characterised in that the third connecting duct (43) connected to the first and second cavity portions is connected on the cylinder side of the control valve (411) in the first connecting duct (41) and on the cylinder side of the control valve (421) in the second connecting duct (42) to the corresponding cavity portion.

12. A valve as claimed in claim 11, characterised in that the third connecting duct (43) runs within the housing (10).

13. A valve as claimed in claim 12, characterised in that at least one portion of the third connecting duct (43), which portion comprises the throttle (431), runs within a wall portion (19) connectable from the exterior to the housing (10).

14. A valve as claimed in any of claims 9 to 13, characterised in that the relief duct (451) connected to the second piston chamber (22) comprises a throttle (452) having at least the same flow cross-section as the throttle (431) in the third connecting duct (43).

**Revendications**

1. Soupape (1) pilotée par un fluide sous pression, qui comporte un boîtier (10) comprenant une tubulure (11) d'entrée reliée à une source de fluide sous pression, une tubulure (12) d'échappement et un cylindre (2) isolé de la chambre de travail de la soupape, dans laquelle circule le fluide sous pression, qui comporte ensuite un bouchon obturateur (13) disposé dans le champ de pression de la tubulure (11) d'entrée, ce bouchon étant relié, par l'intermédiaire d'une tige (23), à un piston (24) coulissant dans le cylindre (2) et divisant ce cylindre (2) en une première chambre (21) de piston, dont le volume augmente lors du passage de l'appareil d'une position de travail à une position de sécurité, et une deuxième chambre (22) de piston, dont le volume diminue lors du passage de l'appareil d'une position de travail à une position de sécurité, qui comporte ensuite au moins un ressort (25) disposé dans le cylindre (2) et exerçant sur le piston (24), la tige (23) et le bouchon obturateur (13), une force dirigée dans le sens de la position de sécurité de la soupape (1), qui comporte ensuite deux conduites (44, 45) de décharge pourvues chacune d'une valve (441, 451) de pilotage, raccordées aux deux chambres (21, 22) de piston et débouchant dans au moins un milieu détendeur, de préférence dans l'atmosphère, qui comporte ensuite une première conduite (41) de liaison pourvue d'une valve (411) de pilotage, et disposée entre le champ de pression de la tubulure (11) d'entrée et la première chambre (21) de piston, et qui comporte enfin une deuxième conduite (42) de liaison pourvue d'une valve (421) de pilotage et disposée entre le champ de pression de la tubulure (11) d'entrée et la deuxième chambre (22) de piston, caractérisée par le fait que la deuxième conduite (42) de liaison est munie d'un clapet antiretour (422) laissant passer du fluide vers la deuxième chambre (22) de piston, qu'une troisième conduite (43) de liaison est prévue, qui relie une première chambre creuse à une deuxième chambre creuse, la première chambre creuse s'étendant depuis l'intérieur de la première conduite (41) de liaison, en passant par la première chambre (21) de piston et par l'intérieur de la conduite (44) de décharge qui y est reliée, jusqu'à l'entrée, du côté du cylindre, de la valve (441) de pilotage disposée dans cette conduite de décharge, et la deuxième chambre creuse s'étendant depuis l'extrémité, du côté du cylindre, du clapet antiretour (422) disposé dans la deuxième conduite (42) de liaison, en passant par la deuxième chambre (22) de piston, jusqu'à l'extrémité, du côté du cylindre, de la valve (451) de pilotage disposée dans la conduite (45) de décharge qui est raccordée à cette deuxième chambre (22) de piston, et que la troisième conduite (43) de liaison a des dimensions telles que, lors d'un contrôle du fonctionnement de la soupape, le bouchon obturateur (13) se déplace jusqu'en position de sécurité à une vitesse nettement inférieure à la vitesse de déplacement lors du fonctionnement normal.

2. Soupape selon la revendication 1, caractérisée par le fait que la valve (411) de pilotage dans la première conduite (41) de liaison et la valve (441) de pilotage dans la conduite (44) de décharge raccordée à la première chambre (21) de piston sont branchées ensemble de telle manière que l'une soit ouverte lorsque l'autre est fermée, et vice versa, et que la valve (421) de pilotage dans la deuxième conduite (42) de liaison ainsi que la valve (451) de pilotage dans la conduite (45) de décharge raccordée à la deuxième chambre (22) de piston sont également branchées ensemble de telle manière que l'une soit fermée lorsque l'autre est ouverte, et vice versa.

3. Soupape selon la revendication 1 ou 2, caractérisée par le fait qu'une conduite auxiliaire (46) de fluide sous pression est reliée à un circuit de pression constitué de la deuxième chambre creuse, l'intérieur de la troisième conduite (43) de liaison et une partie de la première chambre creuse n'incluant pas la première chambre (21) de piston, cette partie étant délimitée par des organes (48, 411) de fermeture disposés de chaque côté du point de raccordement de la conduite (43) de liaison, la conduite auxiliaire (46) comportant un organe (50) de fermeture, de préférence un clapet antiretour laissant passer du fluide vers le circuit de pression.

4. Soupape selon la revendication 1 ou 2, caractérisée par le fait que la troisième conduite (43) de liaison est raccordée à une conduite auxiliaire (46) de fluide sous pression, par l'intermédiaire d'un clapet (3) sélecteur de circuit qui relie soit la première partie de chambre creuse, soit la conduite auxiliaire (46) de fluide sous pression à la deuxième partie de chambre creuse, en fonction de la différence des pressions régnant dans la première partie de chambre creuse et dans la conduite auxiliaire (46) de fluide sous pression.

5. Soupape selon la revendication 4, caractérisée par le fait que la pastille (32) d'obturation du clapet (3) sélecteur de circuit est soumise à une précharge la rappelant en direction de l'obturation de la conduite auxiliaire (46) de fluide sous pression, au moyen d'un ressort (33) par exemple.

6. Soupape selon une des revendications 1 à 5, caractérisée par le fait que les valves (411, 421) de pilotage dans la première et la deuxième conduite (41, 42) de liaison sont disposées entre le cylindre (2) d'une part et le point de raccordement correspondant entre la troisième conduite (43) de liaison et la première, voire la deuxième conduite (41, 42) de liaison, d'autre part.

7. Soupape selon une des revendications 1 à 6, caractérisée par le fait que la première conduite (41) de liaison comporte un gicleur (412).

8. Soupape selon la revendication 7, caractérisée par le fait que la troisième conduite (43) de liaison débouche dans la première partie de chambre creuse à un endroit qui se situe entre le cylindre (2) et le gicleur (412).

9. Soupape selon une des revendications 1 à 8, caractérisée par le fait que la troisième conduite (43) de liaison comporte un gicleur (432).

10. Soupape selon une des revendications 1 à 9, caractérisée par le fait que la conduite (44) de décharge raccordée à la première chambre (21) de piston comporte un gicleur (442).

11. Soupape selon une des revendications 1 à 10, caractérisée par le fait que la troisième conduite (43) de liaison, raccordée aux première et deuxième parties de chambre creuse, est reliée à celles-ci à un endroit qui se situe entre le cylindre et la valve (411) de pilotage disposée dans la première conduite (41) de liaison, et un endroit qui se situe entre le cylindre et la valve (421) de pilotage disposée dans la deuxième conduite (42) de liaison, respectivement.

12. Soupape selon la revendication 11, caractérisée par le fait que la troisième conduite (43) de liaison est incorporée au boîtier (10).

13. Soupape selon la revendication 12, caractérisée par le fait qu'au moins une partie contenant le gicleur (431) de la troisième conduite (43) de liaison est incorporée dans une pièce latérale (19) qui se fixe extérieurement sur le boîtier (10).

14. Soupape selon une des revendications 9 à 13, caractérisée par le fait que la conduite (451) de décharge raccordée à la deuxième chambre (22) de piston est pourvue d'un gicleur (452) dont la section d'ouverture est au moins égale à celle du gicleur (431) de la troisième conduite (43) de liaison.

Fig. 1

Fig. 4

Fig. 5

Fig. 2d

Fig. 2c

Fig. 2b

Fig. 2a

Fig. 3d

Fig. 3c

Fig. 3b

Fig. 3a